# EUROPÄISCHE PATENTANMELDUNG

(11) **EP 3 786 599 A1**
(43) Veröffentlichungstag der Anmeldung: **03.03.2021**
(21) Anmeldenummer: 20192114.5
(22) Anmeldetag: 21.08.2020
(51) Int. Cl.: G01K 7/20, G01K 13/02

(54) **MESSEINRICHTUNG ZUR BESTIMMUNG VON TEMPERATURBEDINGTEN WIDERSTANDSÄNDERUNGEN SOWIE SCHLAUCHSYSTEM MIT EINER SOLCHEN MESSEINRICHTUNG**

(30) Priorität: 02.09.2019 DE 102019213237
(71) Anmelder: ContiTech Schlauch GmbH, 30165 Hannover (DE)
(72) Erfinder: Kautz, Markus, 30419 Hannover (DE); Schmidt, Alexander - c/o Continental AG, 30419 Hannover (DE)
(74) Vertreter: Continental Corporation

(57) **Zusammenfassung**

Dargestellt und beschrieben eine Messeinrichtung zur Bestimmung von temperaturbedingten Widerstandsänderungen von Leiterelementen (11) in Schlauchwandungen (9) mit einem ersten Messanschluss (45) und einem zweiten Messanschluss (47), zwischen die ein zu bestimmender Widerstand geschaltet werden kann, mit einer Messschaltung (31) mit einem Eingang (29) und einem Ausgang (33), wobei die Messschaltung (31) einen zwischen den Eingang (29) und den Ausgang (33) geschalteten ersten Zweig (35) mit einem ersten Widerstand (37) aufweist, wobei die Messschaltung (31) einen zwischen den Eingang (29) und den Ausgang (33) geschalteten zweiten Zweig (43) mit dem ersten Messanschluss (45) und dem zweiten Messanschluss (47) aufweist, wobei der erste Zweig (35) und der zweite Zweig (43) parallel geschaltet sind, wobei die Messeinrichtung (23) ausgestaltet ist, ein Messsignal zwischen einem ersten Messpunkt (41) in dem ersten Zweig (35) und einem zweiten Mess-punkt (49) in dem zweiten Zweig (43) zu erfassen, wobei der erste Messpunkt (41) in dem ersten Zweig (35) zwischen dem Eingang (29) und dem ersten Widerstand (37) angeordnet ist, wobei der zweite Messpunkt (49) in dem zweiten Zweig (43) zwischen dem Eingang (29) und dem ersten Messanschluss (45) angeordnet ist, wobei der erste Widerstand (37) als einstellbarer Widerstand ausgebildet ist und wobei die Messeinrichtung (23) eine Auswerteeinrichtung (25) aufweist, die ausgestaltet ist, aus dem Messsignal ein Ausgangssignal zu erzeugen, das ein Maß für den zwischen den ersten Messanschluss (45) und den zweiten Messanschluss (47) geschalteten Widerstand ist.

## Beschreibung

Die vorliegende Erfindung betrifft Messeinrichtung zur Bestimmung von temperaturbedingten Widerstandsänderungen von Leiterelementen in Schlauchwandungen sowie ein Schlauchsystem mit einer derartigen Messeinrichtung.

Aus dem Stand der Technik ist es bekannt, in der Wandung eines Schlauchs Sensoren vorzusehen, mit denen die Temperatur im Inneren eines Schlauchs bestimmt werden kann. So ist beispielsweise aus der EP 2 434 195 A1 bekannt, entlang der Schlauchwandung zwei Drähte aus unterschiedlichen Materialien zu führen, deren Enden miteinander verbunden sind, um ein Thermoelement zu bilden. Zur Bestimmung der Temperatur in dem Schlauch wird die Thermospannung zwischen den beiden Drähten gemessen. Ein solcher Aufbau ist zum einen kompliziert einzubringen und zum anderen wird dadurch die Temperatur in der Umgebung der Verbindung der beiden Drähte bestimmt und nicht etwa über die gesamte Länge des Schlauchs gemittelt.

Darüber hinaus ist es bekannt, beispielsweise RFID-Chips in der Wandung des Schlauchs vorzusehen, die mit einem Temperatursensor verbunden sind. Dies hat jedoch den Nachteil, dass die Chips mit den Sensoren schwierig in die Wandung des Schlauchs einzubringen sind. Insbesondere ist ein solches Einbringen kompliziert in den herkömmlichen Herstellungsprozess zu integrieren. Insbesondere ergibt sich das Problem, dass die RFID-Chips wegen der Abmessungen des Chips samt Sensor und Antenne eine Schwachstelle im Schlauch darstellen und den Ausgangspunkt für Risse im Schlauch bilden können.

Allerdings ist es häufig erforderlich, die Temperatur des Mediums im Schlauchinneren zu bestimmen. Dies kann einerseits während des normalen Betriebs relevant sein um zu überwachen, ob der Schlauch während des Betriebs nicht zu hohen thermischen Belastungen ausgesetzt ist. Darüber hinaus kann es auch insbesondere im Lebensmittelbereich erforderlich sein, die Temperatur des Schlauchinneren bei einem Reinigungsprozess zu überwachen um sicherzustellen, dass im Inneren des Schlauchs während der Reinigung eine gewisse Mindesttemperatur erreicht worden ist. Schließlich erlaubt die Überwachung der thermischen Belastung, Rückschlüsse auf die verbleibende Lebensdauer des Schlauches ziehen.

Ferner ist es möglich, in der Wandung eines Schlauchs ein Leiterelement vorzusehen, das aus einem Material gebildet ist, das einen temperaturabhängigen spezifischen Widerstand aufweist. Eine Temperaturänderung im Schlauchinneren führt dann zu einer Änderung des Widerstands des Leiterelements, die gemessen werden kann, so dass aus der Änderung des Widerstandes auf die Temperaturänderung geschlossen werden kann. Hierbei taucht jedoch das Problem auf, dass die Widerstandsänderungen häufig sehr klein sind, so dass eine hohe Messgenauigkeit erforderlich ist.

Insbesondere dann, wenn ein Leiterelement verwendet wird, das sich über die gesamte Länge des Schlauchs erstreckt, sind die Widerstandsänderungen jedoch ausreichend, um sie messtechnisch zu erfassen.

Allerdings ergibt sich in Bezug auf die dabei verwendete Messeinrichtung das Problem, dass diese jeweils an den Schlauch angepasst werden muss, in dem die Temperatur bestimmt werden soll, da der Gesamtwiderstand des Leiterelements zum einen davon abhängt, wie lang der Schlauch ist und zum anderen davon, welcher Typ von Leiterelement verwendet wird. Es ist daher erforderlich, die Messeinrichtung für jeden Schlauchtyp unterschiedlich auszugestalten, was mit erheblichen Mehrkosten verbunden ist.

Daher ist es ausgehend vom Stand der Technik die Aufgabe der vorliegenden Erfindung, eine Messeinrichtung zur Erfassung von temperaturbedingten Widerstandsänderungen von Leiterelementen in Schlauchwandungen bereitzustellen, die einfach konfiguriert werden kann, um an unterschiedliche Widerstände des Leiterelements angepasst zu werden.

Erfindungsgemäß wird diese Aufgabe durch eine Messeinrichtung mit den Merkmalen des Anspruchs 1 gelöst.

Die erfindungsgemäße Messeinrichtung zur Bestimmung von temperaturbedingten Widerstandsänderungen von Leiterelementen weist einen ersten Messanschluss und einen zweiten Messanschluss auf, zwischen die der zu bestimmende Widerstand, d. h. die Anschlüsse des Leiterelements eines Schlauchs, geschaltet werden können. Außerdem ist die erfindungsgemäße Messeinrichtung mit einer Messschaltung mit einem Eingang und einem Ausgang versehen, wobei die Messschaltung einen zwischen den Eingang und den Ausgang geschalteten ersten Zweig mit einem ersten Widerstand aufweist und wobei die Messschaltung einen zwischen dem Eingang und dem Ausgang geschalteten zweiten Zweig mit dem ersten Messanschluss und dem zweiten Messanschluss aufweist. Der erste Zweig und der zweite Zweig sind parallel geschaltet, und die Messeinrichtung ist ausgestaltet, ein Messsignal zwischen einem ersten Messpunkt in dem ersten Zweig und einem zweiten Messpunkt in dem zweiten Zweig zu erfassen, wobei der erste Messpunkt zwischen dem Eingang und dem ersten Widerstand angeordnet ist und der zweite Messpunkt zwischen dem Eingang und dem ersten Anschluss angeordnet ist. Ferner weist die Messeinrichtung eine Auswerteeinrichtung auf, die ausgestaltet ist, aus dem Messsignal ein Ausgangssignal zu erzeugen, das ein Maß für den zwischen den ersten Messanschluss und den zweiten Messanschluss geschalteten Widerstand, beispielsweise des Leiters in einem Schlauch, ist.

Erfindungsgemäß ist der erste Widerstand, der parallel zu den beiden Messanschlüssen geschaltet ist, zwischen die beispielsweise das Leiterelement geschaltet werden kann, als einstellbarer Widerstand ausgebildet, so dass dieser Widerstand über einen großen Bereich an den jeweiligen Widerstand des Leiterelements angepasst werden kann, dessen temperaturbedingte Widerstandsänderung beispielsweise erfasst werden soll. Insbesondere kann dadurch für eine Vielzahl unterschiedlicher Schlauchtypen im jeweils unterschiedlichen Widerständen des darin verbauten Leiterelements erreicht werden, dass der erste Widerstand dem Widerstand des Leiterelements bei Umgebungstemperatur entspricht, was häufig wünschenswert ist.

Die Messschaltung kann insbesondere als Brückenschaltung ausgebildet sein, wobei dann im ersten Zweig zwischen dem Eingang und dem ersten Messpunkt ein zweiter Widerstand vorgesehen ist und in dem zweiten Zweig zwischen dem Eingang und dem zweiten Messpunkt ein dritter Widerstand. Durch geeignete Wahl des zweiten und dritten Widerstands kann verhindert werden, dass eine Spannungsversorgung der Messeinrichtung bei einem niedrigen Widerstand, der bestimmt werden soll, aufgrund eines großen Stroms "einknickt".

Ferner ist es bevorzugt, wenn die Messeinrichtung eine Spannung zwischen dem ersten Messpunkt und dem zweiten Messpunkt erfasst. Sofern der Widerstand der Widerstandsdekade passend eingestellt ist, kann aus der Spannungsänderung in einfacher Weise auf die Widerstandsänderung geschlossen werden und durch die Messeinrichtung entsprechend mittels der Auswerteeinrichtung ein Ausgangssignal erzeugt werden.

Weiterhin kann die Messeinrichtung eine Spannungsversorgung aufweisen, deren Spannungsausgänge mit dem Eingang und dem Ausgang verbunden sind. Auf diese Weise kann die Messschaltung mit einer Versorgungsspannung versorgt werden, wobei es weiterhin bevorzugt ist, wenn zwischen dem Eingang der Messschaltung und dem Ausgang der Spannungsversorgung ein veränderbarer Vorwiderstand geschaltet ist. Alternativ kann der Vorwiderstand auch dem Ausgang der Messschaltung nachgeschaltet sein. Durch einen solchen Vorwiderstand ist es möglich, das zwischen den Messpunkten erfasste Signal, insbesondere ein Spannungssignal, an den Eingangsbereich eines Analog-Digital-Wandlers anzupassen, der Teil der Auswerteeinrichtung sein kann.

In bevorzugter Weise ist der einstellbare Widerstand als Widerstandsdekade ausgebildet. Die Einstellung der Dekade kann beispielsweise durch eine Kombination von Schaltern erfolgen, so dass die Messeinrichtung in sehr einfacher Weise an den jeweiligen Schlauchtyp angepasst werden kann, ohne dass sonst bauliche Änderungen an der Messeinrichtung erforderlich sind.

Weiter bevorzugt weist die Widerstandsdekade einen ersten Dekadenanschluss und einen zweiten Dekadenanschluss auf. Ferner sind in der Widerstandsdekade wenigstens eine erste Reihe aus in Reihe geschalteten ersten Dekadenwiderständen und eine zweite Reihe aus in Reihe geschalteten zweiten Dekadenwiderständen vorgesehen. Die erste Reihe weist einen ersten Eingang auf, dem die ersten Dekadenwiderstände nachgestaltet sind, sowie zwischen den Dekadenwiderständen erste Ausgänge auf. Außerdem weist die zweite Reihe einen zweiten Eingang auf, dem die zweiten Dekadenwiderstände nachgeschaltet sind, wobei zwischen den zweiten Dekadenwiderständen zweite Ausgänge vorgesehen sind. Der erste Eingang kann wahlweise mit unterschiedlichen aus den zweiten Ausgängen verbunden werden, und der erste Dekadenanschluss kann wahlweise mit unterschiedlichen aus den ersten Ausgängen verbunden werden. Schließlich ist der zweite Eingang mit dem zweiten Dekadenanschluss verbunden, wobei der eine aus dem ersten Dekadenanschluss und dem zweiten Dekadenanschluss mit dem ersten Messpunkt verbunden ist und der andere aus dem ersten Dekadenanschluss und dem zweiten Dekadenanschluss mit dem Ausgang verbunden ist.

Dadurch, dass zunächst der erste Dekadenanschluss wahlweise mit unterschiedlichen aus den ersten Ausgängen verbunden werden kann, kann dadurch der Gesamtwiderstand der ersten Reihe eingestellt werden. Da der erste Eingang der ersten Reihe wiederum wahlweise mit unterschiedlichen aus den zweiten Ausgängen verbunden werden kann, kann auf diese Weise eingestellt werden, welcher weitere Widerstand auf den in der ersten Reihe eingestellten Widerstand drauf addiert wird. Dieser so gebildete Gesamtwiderstand der Widerstandsdekade ist dann zwischen dem ersten Dekadenanschluss und dem zweiten Dekadenanschluss vorhanden.

Dadurch kann der Widerstand, der an der Widerstandsdekade eingestellt werden kann, über einen großen Bereich variiert werden. Daher können mit der erfindungsgemäßen Messeinrichtung auch die Widerstandsänderungen von Leiterelementen in unterschiedlichen Schläuchen und damit Temperaturänderungen in diesen Schläuchen bestimmt werden, bei denen der Gesamtwiderstand der Leiterelemente zwischen den einzelnen Schläuchen in diesem großen Bereich variiert.

Die Messeinrichtung ist aufgrund der Verwendung des einstellbaren Widerstands und in eine bevorzugten Ausführungsform der Widerstandsdekade allgemein für großes Spektrum von Schläuchen einsetzbar, ohne dass an der Messeinrichtung bauliche Veränderungen vorgenommen werden müssen. Es ist lediglich erforderlich, den einstellbaren Widerstand und insbesondere die Widerstandsdekade für den jeweiligen Schlauchtyp passend einzustellen, sodass der Widerstand und der des Leiterelements im Wesentlichen übereinstimmen.

Weiterhin ist es bei der Widerstandsdekade bevorzugt, wenn die zweiten Widerstände und die ersten Widerstände jeweils gleich groß sind, wobei die zweiten Widerstände jedoch gegenüber den ersten Widerständen um einen Faktor 10 kleiner sein können. Auf diese Weise kann mittels der ersten Reihe der Gesamtwiderstand grob eingestellt und mittels der zweiten Reihe dann weiter fein eingestellt werden, um den gewünschten Gesamtwiderstand zu erhalten.

In einer anderen bevorzugten Ausführungsform kann der erste Widerstand auch als ein Potentiometer und insbesondere als ein elektronisches Potentiometer, also ein Potentiometer, dessen Widerstand mittels eines Steuersignals eingestellt werden kann, ausgebildet sein. Dann ist es ebenfalls möglich, den Widerstand der Messeinrichtung, der parallel zu dem durch die Messeinrichtung zu bestimmenden Widerstand geschaltet ist, in einfacher einzustellen. Im Falle eines elektronischen Potentiometers und der Verwendung eines Mikrocontrollers ist es auch möglich, den verstellbaren Widerstand selbsttätig durch die Messeinrichtung einzustellen. Wenn beispielsweise ein Schlauch mit der Messeinrichtung verbunden wird, wird zunächst eine Startroutine ausgeführt, in der Mikrocontroller das elektronische Potentiometer mit dem Widerstand des Leiterelements des Schlauchs abgleicht, was beispielsweise so erfolgen kann, dass das elektronische Potentiometer auf denselben Widerstand wie der des Leiterelements eingestellt wird. Der in der Startroutine eingestellte Widerstand des elektronischen Potentiometers wird dann während des eigentlichen Messprozesses für die Temperatur im Schlauch beibehalten. Allerdings ist es denkbar, dass dann, wenn das an den Messpunkten erfasste Signal ergibt, dass sich der zwischen den Messanschlüssen erfasste Widerstand stark verändert hat, die Startroutine erneut durchlaufen wird oder das elektronische Potentiometer anderweitig neu an den geänderten Widerstand angepasst wird.

Weiterhin kann die erfindungsgemäße Messeinrichtung in einem Schlauchsystem verwendet werden, das einen Schlauch, der sich zwischen einem ersten und einem zweiten Ende erstreckt, aufweist, wobei der Schlauch eine Wandung aufweist und in der Wandung ein Leiterelement eingelassen ist, das sich zwischen dem ersten und dem zweiten Ende erstreckt. Das Leiterelement kann aus einem elektrisch leitfähigen Material mit einem temperaturabhängigen spezifischen Widerstand ausgebildet sein, wobei das Leiterelement einen ersten elektrischen Anschluss und einen zweiten elektrischen Anschluss aufweist, die entlang des Leiterelements beabstandet sind. Das Schlauchsystem weist ferner eine Messeinrichtung auf, wobei der erste Messpunkt mit dem ersten elektrischen Anschluss verbunden ist und der zweite Messpunkt mit dem zweiten elektrischen Anschluss.

Im Folgenden wird die vorliegende Erfindung anhand einer Zeichnung erläutert, die lediglich bevorzugte Ausführungsbeispiele der vorliegenden Erfindung zeigt, wobei
- Fig. 1: eine schematische Darstellung eines bevorzugten Ausführungsbeispiels eines erfindungsgemäßen Schlauchsystems ist,
- Fig. 2: ein Ersatzschaltbild eines Teils eines ersten Ausführungsbeispiels einer erfindungsgemäßen Messeinrichtung zeigt und
- Fig. 3: ein Ersatzschaltbild eines Teils eines zweiten Ausführungsbeispiels einer erfindungsgemäßen Messeinrichtung zeigt.

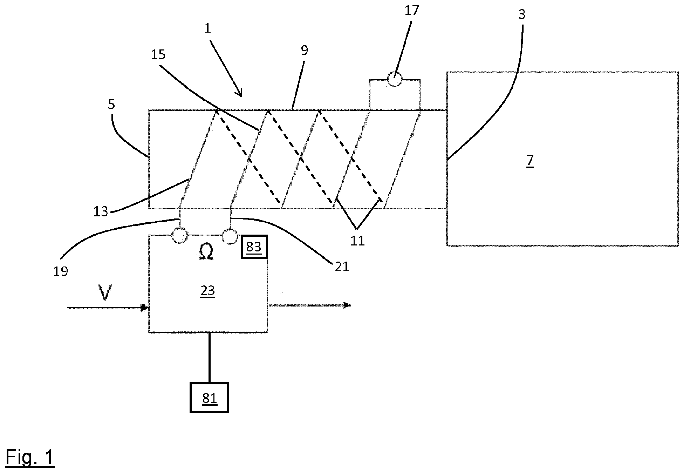

Figur 1 zeigt eine schematische Darstellung eines bevorzugten Ausführungsbeispiels eines erfindungsgemäßen Schlauchsystems, das einen Schlauch 1 aufweist, der sich zwischen einem ersten Ende 3 und einem zweiten Ende 5 erstreckt, wobei an dem ersten Ende 3 des hier gezeigten Ausführungsbeispiels noch ein Anschlusselement 7 angebracht ist. Der Schlauch 1 weist in seiner Wandung 9 ein Leiterelement 11 auf, das sich im Wesentlichen von dem ersten Ende 3 bis zum zweiten Ende 5 erstreckt, wobei das Leiterelement 11 einen ersten Abschnitt 13 sowie einen zweiten Abschnitt 15 aufweist. Der erste Abschnitt und der zweite Abschnitt 13, 15 verlaufen im Wesentlichen parallel zueinander helixförmig um das Innere des Schlauch 1 herum, wobei die Abschnitte 13, 15 im Bereich des ersten Endes 3 an einer Kontaktstelle 17 miteinander verbunden sind. Benachbart zu dem zweiten Ende 5 des Schlauchs 1 sind der erste Abschnitt 13 und der zweite Abschnitt 15 mit einem ersten elektrischen Anschluss 19 und einem zweiten elektrischen Anschluss 21 versehen.

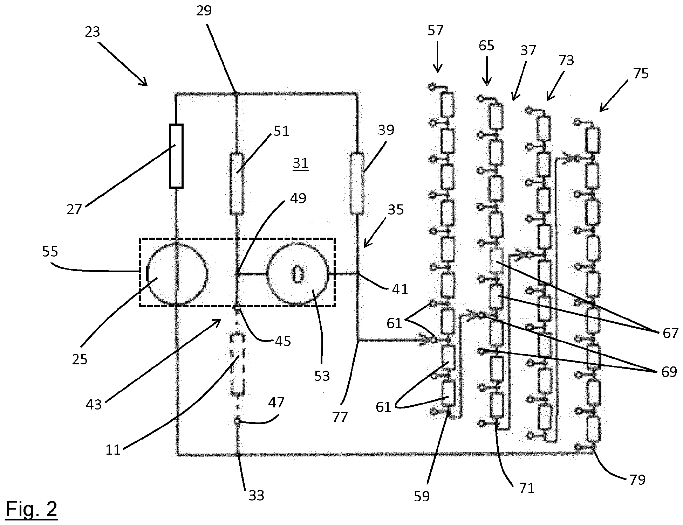

Ferner weist das Ausführungsbeispiel eines erfindungsgemäßen Schlauchsystems ein Ausführungsbeispiel einer erfindungsgemäßen Messeinrichtung 23 auf, deren Ersatzschaltbild in Figur 2 dargestellt ist.

Wie aus Figur 2 zu erkennen ist, weist die das erste Ausführungsbeispiel einer Messeinrichtung 23 unter anderem eine Spannungsversorgung 25 auf, die über einen veränderbaren Vorwiderstand 27 mit einem Eingang 29 einer Messschaltung 31 verbunden ist. Außerdem ist die Spannungsversorgung 25 mit einem Ausgang 33 der Messschaltung 31 verbunden.

Die Messschaltung 31 weist einen ersten Zweig 35 auf, der zwischen dem Eingang 29 und dem Ausgang 33 geschaltet ist und einen ersten einstellbaren Widerstand in Form einer Widerstandsdekade 37 sowie einen zweiten Widerstand 39 aufweist. In dem dargestellten Ausführungsbeispiel ist ferner in dem ersten Zweig 35 ein erster Messpunkt 41 vorgesehen, der zwischen dem Eingang 29 und dem ersten Widerstand in der Form der Widerstandsdekade 39 angeordnet ist, wobei er ferner auch zwischen dem zweiten Widerstand 39 und der Widerstandsdekade 37 angeordnet ist.

Weiterhin weist die Messschaltung 31 einen zweiten Zweig 43 auf, der ebenfalls zwischen dem Eingang 29 und dem Ausgang 33 geschaltet ist und dabei parallel geschaltet ist zu dem ersten Zweig 35.

Der zweite Zweig 43 weist einen dritten Widerstand 45 auf sowie einen ersten Messanschluss 45 und einen zweiten Messanschluss 47. In dem Ausführungsbeispiel des erfindungsgemäßen Schlauchsystems können der erste Messanschluss 45 und der zweite Messanschluss 47 mit dem ersten elektrischen Anschluss 19 und dem zweiten elektrischen Anschluss 21 verbunden werden, um den Widerstand des Leiterelements 11 im Schlauch 1 zu bestimmen, wobei dieser Widerstand in dem Ersatzschaltbild aus Figur 2 gestrichelt dargestellt ist. Zwischen dem ersten Anschluss 45 und dem Eingang 29 ist ein zweiter Messpunkt 49 vorgesehen, wobei zwischen diesem und dem Eingang 29 noch ein dritter Widerstand 51 geschaltet ist.

Zwischen den Messpunkten 41, 49 kann ein Messsignal, in bevorzugter Weise eine Spannung, erfasst werden, wobei ein dazu ausgebildetes Messelement 53 vorgesehen ist. Durch den ersten und den zweiten Zweig 35, 43 wird damit eine sogenannte Messbrücke realisiert, durch die zwischen den Messpunkten 41, 45 ein Messsignal generiert wird, das ein Maß für den zwischen den ersten Messanschluss 45 und den zweiten Messanschluss 47 geschalteten Widerstand des Leiterelements 11 ist.

In dem hier beschriebenen Ausführungsbeispiel einer erfindungsgemäßen Messeinrichtung 23 können die Spannungsversorgung 25 und das Messelement 53 in einem Mikrocontroller 55 enthalten sein, der zudem aufgrund einer geeigneten Programmierung eine Auswerteeinrichtung bilden kann, so dass er ein Ausgangssignal erzeugen kann, das ein Maß zwischen den Messanschlüssen 45, 47 geschalteten Widerstand des Leiterelements 11 ist.

Die Widerstandsdekade 37 ist in dem hier beschriebenen bevorzugten Ausführungsbeispiel derart ausgestaltet, dass sie vier Reihen von Widerständen aufweist, die in der jeweiligen Reihe in einer Reihenschaltung angeordnet sind.

Insbesondere weist die erste Reihe 57 der Widerstandsdekade 37 einen ersten Eingang 59 sowie eine Vielzahl erster Dekadenwiderstände 61 auf, die in Reihe geschaltet sind, wobei zwischen den ersten Dekadenwiderständen 61 erste Ausgänge 63 angeordnet sind. Analog weist die zweite Reihe 65 eine Vielzahl zweiter Dekadenwiderstände 67 auf, zwischen denen zweite Ausgänge 69 angeordnet sind. Schließlich weist auch die zweite Reihe 65 einen zweiten Eingang 71 auf. Die dritte Reihe 73 und die vierte Reihe 75 sind analog zu den zuvor beschriebenen Reihen 57, 65 ausgestaltet.

Schließlich weist die Widerstandsdekade 37 einen ersten Dekadenanschluss 77 sowie einen zweiten Dekadenanschluss 79 auf. Der erste Dekadenanschluss 77 ist mit dem ersten Messpunkt 41 verbunden, während der zweite Dekadenanschluss 79 mit dem Ausgang der Messschaltung 31 elektrisch verbunden ist.

Durch die Widerstandsdekade 37 ist es erfindungsgemäß möglich, die Messschaltung bzw. die Messbrücke an den jeweiligen Widerstand des Leiterelements 11 anzupassen, so dass die Messeinrichtung 23 ohne großen Aufwand an unterschiedliche Schläuche mit unterschiedlich langen Leiterelementen 11 angepasst werden kann und insbesondere an unterschiedliche Widerstände der Leiterelemente 11. Insbesondere ist es wünschenswert, dass der Widerstand der Widerstandsdekade 37 im Wesentlichen dem Widerstand des Leiterelements 11 bei Umgebungstemperatur entspricht, so dass beispielsweise ein in dem Messelement 53 enthaltener Analog-Digital-Wandler bzw. dessen Messbereich voll ausgenutzt werden kann, um eine genaue Messung einer Widerstandänderung und eine damit verbundene genaue Temperaturmessung zu ermöglichen.

Die Einstellung des ersten Widerstandes bzw. der Widerstandsdekade 37 erfolgt in der Weise, dass der erste Dekadenanschluss 77 beispielsweise über geeignet aufgebaute Schalter wahlweise, wie in dem Ersatzschaltbild nach Figur 2 durch einen Pfeil angedeutet, mit unterschiedlichen ersten Ausgängen 63 verbunden werden kann, so dass eine unterschiedliche Anzahl erster Dekadenwiderstände 61 zwischen den ersten Dekadenanschluss 77 und den ersten Eingang 59 geschaltet sind. Der erste Eingang 59 wiederum kann wahlweise mit unterschiedlichen zweiten Ausgängen 69 der zweiten Reihe 65 verbunden werden, so dass wiederum die Anzahl zweiter Dekadenwiderstände 67, die zwischen den ersten Eingang 59 und den zweiten Eingang 71 geschaltet sind, variiert werden kann.

Analog kann dann mit der dritten und vierten Reihe verfahren werden. Wenn, wie in dem hier beschriebenen bevorzugten Ausführungsbeispiel sowohl die ersten Dekadenwiderstände 61 als auch die zweiten Dekadenwiderstände 67 jeweils gleich groß sind, die ersten Dekadenwiderstände 61 aber einen Faktor 10 größer als die zweiten Dekadenwiderstände 67, kann schon durch die erste und zweite Reihe 57, 65 der Widerstand der Widerstandsdekade über einen sehr großen Bereich variiert werden. Die Widerstände der dritten und vierten Reihe sind dann jeweils um einen Faktor 10 bzw. 100 kleiner als die der zweiten Reihe, so dass hier eine Feineinstellung erfolgen kann.

Die Widerstandsdekade 37 lässt es also zu, den ersten Widerstand insgesamt sehr genau an den Widerstand des Leiterelements 11 in dem Schlauch 1 anzupassen, ohne das bauliche Veränderungen in der Messeinrichtung 23 erforderlich sind. Darüber hinaus kann auch durch Verstellen des Vorwiderstandes 27 die Messeinrichtung an unterschiedliche Schlauchtypen 23 angepasst werden, ohne dass die Messeinrichtung 23 baulich verändert werden muss.

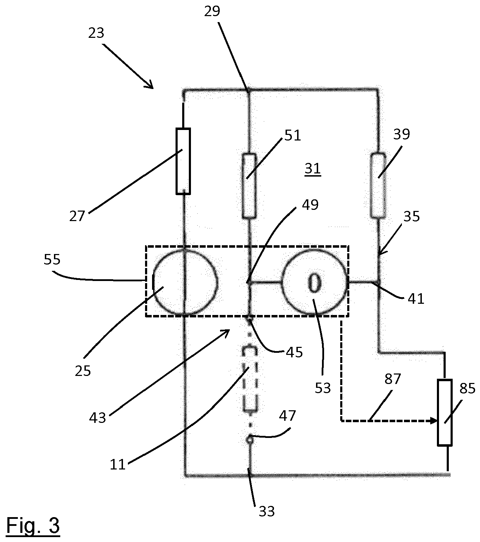

Schließlich kann, wie in Figur 1 gezeigt, die Messeinrichtung 23 noch einen weiteren Temperatursensor 81 aufweisen, mit dem die Umgebungstemperatur für Kalibrierzwecke erfasst werden kann. Darüber hinaus kann an der Messeinrichtung 23 eine Übertragungseinrichtung 83 vorgesehen sein, mit der ein Signal, das ein Maß für den Widerstand des Leiterelements 11 oder die Temperatur des Schlauchs 1 ist, drahtlos übertragen werden.
Bei dem zweiten in Fig. 3 gezeigten Ausführungsbeispiel einer erfindungsgemäßen Messeinrichtung 23 ist der verstallbare erste Widerstand als elektronisches Potentiometer 85 ausgeführt, das von dem Mikrocontroller 55 angesteuert werden kann, wie durch die Verbindung 87 dazwischen angedeutet.

Der Widerstand des elektronischen Potentiometer 85 kann mittels eines Steuersignals von dem Mikrocontroller 55 eingestellt werden kann. Dann ist es möglich, den verstellbaren Widerstand selbsttätig durch die Messeinrichtung 23 einzustellen. Wenn beispielsweise ein Schlauch 1 mit der Messeinrichtung 23 verbunden wird, wird zunächst eine Startroutine ausgeführt, in der Mikrocontroller 55 das elektronische Potentiometer 85 mit dem Widerstand des Leiterelements 11 des Schlauchs 1 abgleicht, was beispielsweise so erfolgen kann, dass das elektronische Potentiometer 85 auf denselben Widerstand wie der des Leiterelements 11 eingestellt wird.

Der in der Startroutine eingestellte Widerstand des elektronischen Potentiometers wird dann während des eigentlichen Messprozesses für den Widerstand bzw. die Temperatur im Schlauch 1 beibehalten.

Allerdings ist es denkbar, dass dann, wenn das an den Messpunkten 41, 49 erfasste Signal ergibt, dass sich der zwischen den Messanschlüssen 45, 47 erfasste Widerstand stark verändert hat, die Startroutine erneut durchlaufen wird oder das elektronische Potentiometer 85 anderweitig neu an den geänderten Widerstand angepasst wird.

Somit kann auch dieses zweite Ausführungsbeispiel einer erfindungsgemäßen Messeinrichtung 23 in einfacher Weise an unterschiedliche Schläuche 1 angepasst werden.

### Bezugszeichenliste:

- 1: Schlauch
- 3: erstes Ende
- 5: zweites Ende
- 7: Anschlusselement
- 9: Wandung
- 11: Leiterelement
- 13: erster Abschnitt
- 15: zweiter Abschnitt
- 17: Kontaktstelle
- 19: erster elektrischer Anschluss
- 21: zweiter elektrischer Anschluss
- 23: Messeinrichtung
- 25: Spannungsversorgung
- 27: Vorwiderstand
- 29: Eingang
- 31: Messschaltung
- 33: Ausgang
- 35: erster Zweig
- 37: Widerstandsdekade
- 39: zweiter Widerstand
- 41: erster Messpunkt
- 43: zweiter Zweig
- 45: erster Messanschluss
- 47: zweitere Messanschluss
- 49: zweiter Messpunkt
- 51: dritter Widerstand
- 53: Messelement
- 55: Mikrocontroller
- 57: erste Reihe
- 59: erster Eingang
- 61: erste Dekadenwiderstände
- 63: erste Ausgänge
- 65: zweite Reihe
- 67: zweite Dekadenwiderstände
- 69: zweite Ausgänge
- 71: zweiter Eingang
- 73: dritter Eingang
- 75: vierter Eingang
- 77: erster Dekadenanschluss
- 79: zweiter Dekadenanschluss
- 81: Temperatursensor
- 83: Übertragungseinrichtung
- 85: Elektronisches Potentiometer
- 87: Verbindung

## Patentansprüche

1. Messeinrichtung zur Bestimmung von temperaturbedingten Widerstandsänderungen von Leiterelementen (11) in Schlauchwandungen (9)
mit einem ersten Messanschluss (45) und einem zweiten Messanschluss (47), zwischen die ein zu bestimmender Widerstand geschaltet werden kann,
mit einer Messschaltung (31) mit einem Eingang (29) und einem Ausgang (33),
wobei die Messschaltung (31) einen zwischen den Eingang (29) und den Ausgang (33) geschalteten ersten Zweig (35) mit einem ersten Widerstand (37) aufweist,
wobei die Messschaltung (31) einen zwischen den Eingang (29) und den Ausgang (33) geschalteten zweiten Zweig (43) mit dem ersten Messanschluss (45) und dem zweiten Messanschluss (47) aufweist,
wobei der erste Zweig (35) und der zweite Zweig (43) parallel geschaltet sind,
wobei die Messeinrichtung (23) ausgestaltet ist, ein Messsignal zwischen einem ersten Messpunkt (41) in dem ersten Zweig (35) und einem zweiten Messpunkt (49) in dem zweiten Zweig (43) zu erfassen,
wobei der erste Messpunkt (41) in dem ersten Zweig (35) zwischen dem Eingang (29) und dem ersten Widerstand (37) angeordnet ist,
wobei der zweite Messpunkt (49) in dem zweiten Zweig (43) zwischen dem Eingang (29) und dem ersten Messanschluss (45) angeordnet ist,
wobei der erste Widerstand (37) als einstellbarer Widerstand ausgebildet ist und
wobei die Messeinrichtung (23) eine Auswerteeinrichtung (25) aufweist, die ausgestaltet ist, aus dem Messsignal ein Ausgangssignal zu erzeugen, das ein Maß für den zwischen den ersten Messanschluss (45) und den zweiten Messanschluss (47) geschalteten Widerstand ist.

2. Messeinrichtung nach Anspruch 1, wobei der erste Widerstand eine Widerstandsdekade (37) ist.

3. Messeinrichtung nach Anspruch 2, wobei die Widerstandsdekade (37) einen ersten Dekadenanschluss (77) und einen zweiten Dekadenanschluss (79) aufweist,
wobei die Widerstandsdekade (37) eine erste Reihe (57) aus in Reihe geschalteten ersten Dekadenwiderständen (61) und eine zweite Reihe (65) aus in Reihe geschalteten zweiten Dekadenwiderständen (67) aufweist,
wobei die erste Reihe (57) einen ersten Eingang (59), dem die ersten Dekadenwiderstände (61) nachgeschaltet sind, sowie zwischen den ersten Dekadenwiderständen (61) erste Ausgänge (63) aufweist,
wobei die zweite Reihe (65) einen zweiten Eingang (71), dem die zweiten Dekadenwiderstände (67) nachgeschaltet sind, sowie zwischen den zweiten Dekadenwiderständen (67) zweite Ausgänge (69) aufweist,
wobei der erste Eingang (59) wahlweise mit unterschiedlichen aus den zweiten Ausgängen (69) verbunden werden kann,
wobei der erste Dekadenanschluss (77) wahlweise mit unterschiedlichen aus den ersten Ausgängen (63) verbunden werden kann,
wobei der zweite Eingang (71) mit dem zweiten Dekadenanschluss (79) verbunden ist und
wobei der eine aus dem ersten Dekadenanschluss (77) und dem zweiten Dekadenanschluss (79) mit dem ersten Messpunkt (41) verbunden ist und der andere aus dem ersten Dekadenanschluss (77) und dem zweiten Dekadenanschluss (79) mit dem Ausgang (33) verbunden ist.

4. Messeinrichtung nach Anspruch 3, wobei die ersten Dekadenwiderstände (61) gleich groß sind,
wobei die zweiten Dekadenwiderstände (67) untereinander gleich groß und kleiner, vorzugsweise um einen Faktor 10, als die ersten Dekadenwiderstände (61) sind.

5. Messeinrichtung nach Anspruch 1, wobei der erste Widerstand ein einstellbares Potentiometer, vorzugsweise ein elektronisches Potentiometer (85), ist.

6. Messeinrichtung nach einem oder mehreren der Ansprüche 1 bis 5, wobei die Messeinrichtung (23) eine Spannung zwischen dem ersten Messpunkt (41) und dem zweiten Messpunkt (49) erfasst.

7. Messeinrichtung nach einem oder mehreren der Ansprüche 1 bis 6, wobei die Messeinrichtung (23) eine Spannungsversorgung (25) aufweist, deren Spannungsausgänge mit dem Eingang (29) und dem Ausgang (33) verbunden sind.

8. Messeinrichtung nach einem oder mehreren der Ansprüche 1 bis 7, wobei ein Mikrocontroller (25) vorgesehen ist, der ausgestaltet ist, das Messsignal zwischen dem ersten und dem zweiten Messanschluss (41, 49) zu erfassen, und der die Auswerteeinrichtung bildet, die ausgestaltet ist, aus dem Messsignal ein Ausgangssignal zu erzeugen.

9. Messeinrichtung nach einem oder mehreren der Ansprüche 1 bis 8, wobei in dem ersten Zweig (35) zwischen dem Eingang (29) und dem ersten Messpunkt (41) ein zweiter Widerstand (39) vorgesehen ist und
wobei in dem zweiten Zweig (43) zwischen dem Eingang (29) und dem zweiten Messpunkt (49) ein dritter Widerstand (51) vorgesehen ist.

10. Messeinrichtung nach einem oder mehreren der Ansprüche 1 bis 9, wobei ein veränderbarer Vorwiderstand (27) dem Eingang der Messschaltung (31) vorgeschaltet oder dem Ausgang (33) der Messschaltung (31) nachgeschaltet ist.

11. Schlauchsystem,
mit einem Schlauch (1), der sich zwischen einem ersten und einem zweiten Ende (3, 7) erstreckt,
wobei der Schlauch (1) eine Wandung (9) aufweist,
wobei in der Wandung (9) ein Leiterelement (11) eingelassen ist, das sich zwischen dem ersten und dem zweiten Ende (3, 7) erstreckt,
wobei das Leiterelement (11) aus einem elektrisch leitfähigen Material mit einem temperaturabhängigen spezifischen Widerstand ausgebildet ist und
wobei das Leiterelement (11) einen ersten elektrischen Anschluss (19) und einen zweiten elektrischen Anschluss (21) aufweist, die entlang des Leiterelements (11) beabstandet sind, und
mit einer Messeinrichtung nach einem der Ansprüche 1 bis 10, die mit dem ersten und mit dem zweiten elektrischen Anschluss (19, 21) verbunden ist.
